# EUROPEAN PATENT APPLICATION

(11) **EP 4 108 643 A1**
(43) Date of publication of application: **28.12.2022**
(21) Application number: 21382558.1
(22) Date of filing: 23.06.2021
(51) Int. Cl.: C03C 25/12, C03C 25/32, C03C 25/321, C03C 25/34, C09D 103/02, C09D 161/12, C09D 161/14, D04H 1/64

(54) **CURABLE BINDER COMPOSITION FOR MINERAL WOOL COMPRISING BIOCIDE**

(71) Applicant: URSA Insulation, S.A., 28004 Madrid (ES)
(72) Inventor: MOLINERO ARENAS, Alejandro, 28224 MADRID (ES); CASADO DOMINGUEZ, Arturo Luis, 28860 MADRID (ES); URIZ SOLÁ, Pedro, 43151 TARRAGONA (ES); ORTIZ ÁLVAREZ, Alba María, 28803 MADRID (ES)
(74) Representative: Plasseraud IP

(57) **Abstract**

The present invention is a curable binder composition for a mineral wool product comprising a low amount of inorganic biocide compound that is stable, presents high reactivity and efficient against pathogen.

## Description

### Technical Field

This disclosure pertains to the field of curable binder composition to manufacture mineral wool products. The mineral wool products obtained may be used as thermal and acoustic insulation or as mineral wool panels to make air ducts.

### Background Art

Mineral wool products are widely used for the thermal and acoustic insulation of different parts of buildings, transportations, or appliances, for fire protection, and for the manufacture of air ducts made of mineral wool panels. Mineral wool materials are mainly randomly interlaced masses of mineral wool fibers with varying lengths and usually bound by a cured resin-based binder. Three types of mineral materials are most commonly employed, glass, rock or slag. Processes for the production of mineral wool products are well known in the art, and usually comprise the steps of melting the mineral material to an adequate temperature, fiberizing the molten mixture into fine fibers, spraying of an uncured curable binder composition to the individual fibers while they still have some residual heat, collection of the fibers and formation of a primary fleece on a foraminous conveyor, densifying the fleece, and curing the curable binder composition at elevated temperatures. The cured mat is then cut to the desired size with transverse and edge trimmers to manufacture, for example, mineral wool panels of air ducts.

In a building, the air ducts made of mineral wool panels are responsible for distributing the conditioned air breathed by the people present inside the building. Under certain conditions, pathogens, such as fungi, bacteria and viruses may develop inside the air ducts. However, breathing air free of fungi, bacteria and viruses is important, and nowadays even crucial. Therefore, the protection against these pathogens that can eventually grow under particular conditions is very important in the air ducts made of mineral wool panels.

To solve this problem, EP 2 485 989 discloses the incorporation of biocide organic compounds to a binder composition. However, a biocide organic compound is not efficient against all the pathogens, and thus, it needs to be selected for each pathogen. Therefore, this solution requires determining the pathogens that can be present in the air duct, selecting the most efficient biocide organic compounds against these pathogens and then add the selected biocide organic compounds to the binder composition. Additionally, in the mineral wool manufacturing process biocide organic compounds can degrade at the high temperatures applied. This solution is thus difficult to implement industrially, and particularly difficult to apply in the industrial production of mineral wool.

Another solution is disclosed in WO 2014/140396. According to WO 2014/140396, a porous veil of copper or copper alloy is incorporated to the wool product. However, this porous veil is very expensive.

Therefore, there is still a need for a mineral wool product that is efficient against pathogens in air duct and that can be industrially produced.

Surprisingly, the inventors developed a curable binder composition that meets this need.

### Summary

According to a first aspect, it is proposed a curable binder composition for a mineral wool product comprising a thermoset resin and an inorganic biocide compound, characterized in that the amount of inorganic biocide compound is less than or equal to 0.9 wt.% relative to the dry weight of the curable binder composition.

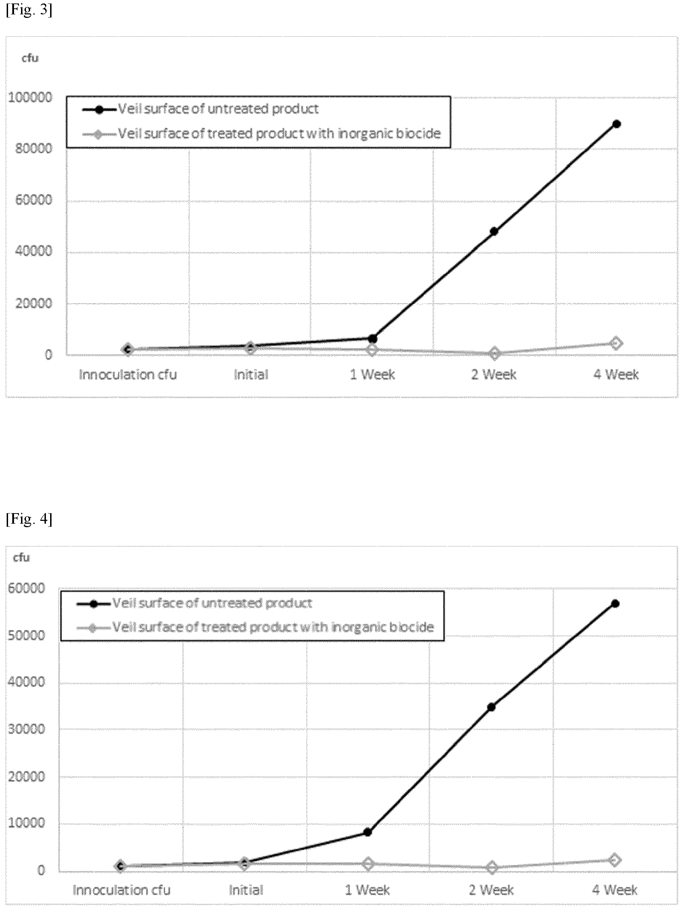

Mineral wool products made by the curable binder composition according to the invention are advantageously efficiently protected against pathogens, such as *Legionella, Clostridium Perfringens, Pseudomonas Aeruginosa, Staphylococcus Aureus* and *Candida Albicans,* even though the amount of inorganic biocide compound in the curable binder composition according to the invention is low. Indeed, the population of these pathogens can be first controlled and then reduced in the mineral wool products made by the curable binder composition according to the invention. Particularly, Figs. 3 to 8B show the control of *Pseudomonas Aeruginosa, Staphylococcus Aureus* and *Candida Albicans* population in mineral wool by the curable composition according to the invention.

Moreover, the inventors have surprisingly found that the curable binder composition according to the invention is stable. Indeed, a curable binder composition having an amount of inorganic biocide compound higher than 1 wt.% relative to the dry weight of the curable binder composition is unstable, precipitates in the nozzles and eventually blocks them, thereby hindering the spraying of the uncured curable binder composition to the individual fibers to make the mineral wool produced.

Indeed, the water dilutability of:
- the curable binder composition according to the invention is higher than 4 g of water/g of curable binder composition, while
- a curable binder composition having an amount of inorganic biocide compound higher than 1 wt.% is equal to or less than 4 g of water/g of curable binder composition,
and the inventors have found that a curable binder composition containing an inorganic biocide compound is stable if it has a water dilutability higher than 4 g of water/g of curable binder composition and is unstable if it has a water dilutability equal to or less than 4 g of water/g of curable binder composition.

As used herein, the expression "water dilutability" refers to the amount of water that can be added per gram of curable binder composition before permanent turbidity appears. The water dilutability is determined at 20°C by mixing 1 g of the curable binder composition with incremental quantities of distilled water while mixing until the solution gets permanently cloudy.

Moreover, the reactivity of the curable binder composition according to the invention is advantageously high when the amount of inorganic biocide compound is less than or equal to 0.9 wt.% relative to the dry weight of the curable binder composition.

The inventors have thus found that the curable binder composition according to the invention avoids the above-mentioned disadvantage of stability when a high amount of inorganic biocide compound is used, without compromising the resin reactivity and its biocide activity.

In addition, the inventors have surprisingly found that the curable binder composition according to the invention further comprising amino compounds such as urea and/or ammonium sulfate catalyst, does not have bad odor. It is known that curable binder compositions comprising amino compound such as urea and/or ammonium sulfate catalyst have bad odor. This bad odor is caused by the release of volatile amine compounds such as trimethylamine (TMA), even in trace amounts, due the hydrolysis of the ammonium salts in the curable binder composition. While not wishing to be bound by theory, the inventors are of the opinion that the inorganic biocide compound, in particular the salt of copper, reduces the TMA release.

In another aspect, it is proposed a method for manufacturing a mineral wool product comprising mineral wool fibers and an inorganic biocide compound, the method comprising the following steps:
a) providing the curable binder composition according to the invention,
b) applying the curable binder composition to the surface of the mineral wool fibers, and
c) curing the curable binder composition on the surface of the mineral wool fibers to obtain the mineral wool product comprising mineral wool fibers and an inorganic biocide compound.

In another aspect, it is proposed a mineral wool product comprising mineral wool fibers and an inorganic biocide compound, characterized in that the amount of inorganic biocide compound in the mineral wool product, is less than or equal to 0.16 wt.% relative to the weight of mineral wool product.

In another aspect, it is proposed an air duct made of a least one mineral wool product according to the invention being a mineral wool panel.

In another aspect, it is proposed the use of a mineral wool product according to the invention being a mineral wool panel to make ducts, preferably air ducts.

### Brief Description of Drawings

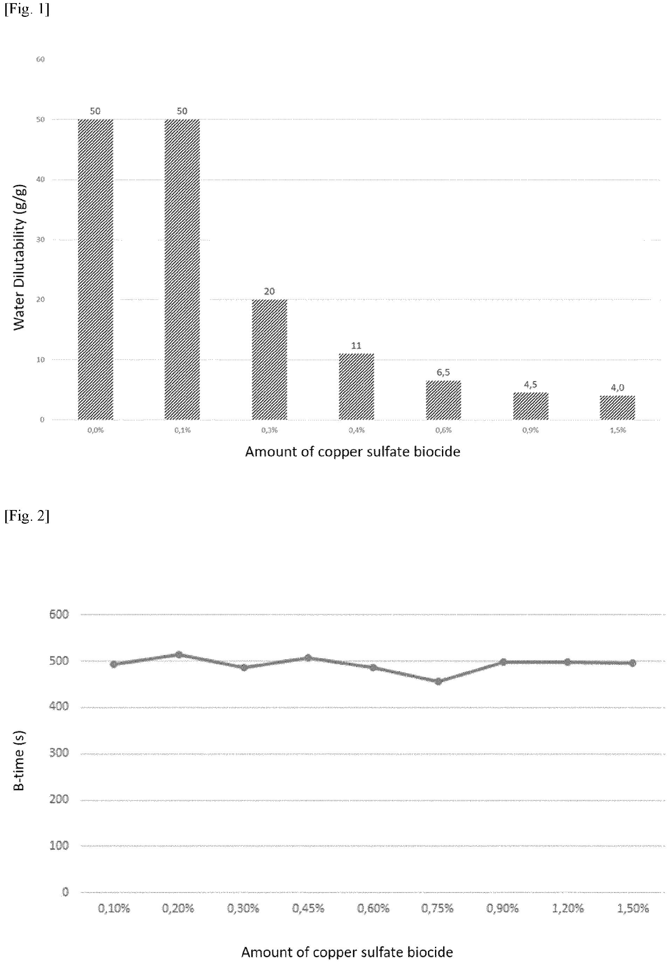

[Fig. 1] shows the influence of the amount of inorganic biocide compound (copper sulfate pentahydrate) contained in a phenolic resin on the water dilutability of said phenolic resin. The amount of inorganic biocide compound is expressed relative to the dry weight of the phenolic resin.

[Fig. 2] shows the influence of the amount of inorganic biocide compound (copper sulfate pentahydrate) contained in a phenolic resin on the reactivity of the phenolic resin. The amount of inorganic biocide compound is expressed relative to the dry weight of the phenolic resin.

[Fig. 3] shows the proliferation curve of *Pseudomona Aeruginosa* inoculated on the internal surface of air duct panels URSA AIR P8858 ZERO 25mm thickness untreated and treated with a phenolic binder comprising 0.3% of inorganic biocide compound (copper sulfate pentahydrate) for several incubation times.

[Fig. 4] shows the proliferation curve of *Staphylococcus Aureus* inoculated on the internal surface of air duct panels URSA AIR P8858 ZERO 25mm thickness untreated and treated with a phenolic binder comprising 0.3% of inorganic biocide compound (copper sulfate pentahydrate) for several incubation times.

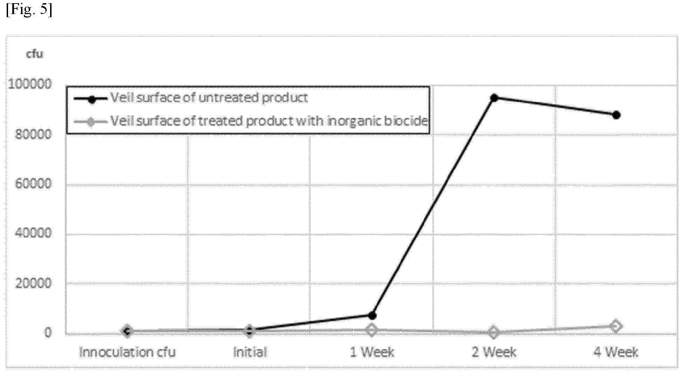

[Fig. 5] shows the proliferation curve of the fungi strain *Candida Albicans* inoculated on the internal surface of air duct panels URSA AIR P8858 ZERO 25mm thickness untreated and treated with a phenolic binder comprising 0.3% of inorganic biocide compound (copper sulfate pentahydrate) for several incubation times.

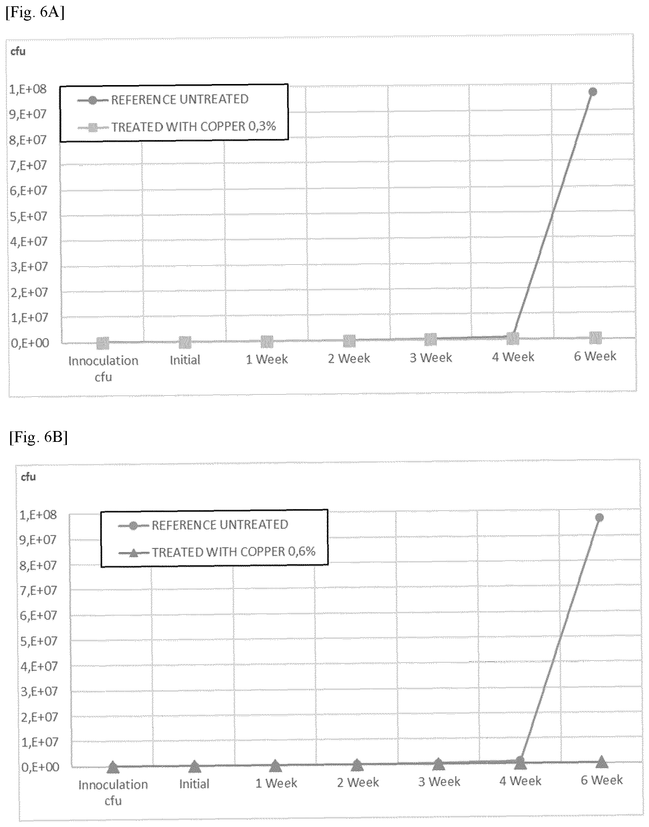

[Fig. 6A] and [Fig. 6B] show the proliferation curves of the fungi stain *Pseudomona Aeruginosa* inoculated on the panel core of air duct panels URSA AIR P8858 ZERO 25mm thickness untreated and treated with a phenolic binder comprising two different amounts of the inorganic biocide compound (copper sulfate pentahydrate). [Fig. 6A] and [Fig. 6B] show the curve when a phenolic binder comprising 0.3% ([Fig. 6A]) or 0.6% ([Fig. 6B]) of inorganic biocide compound is applied.

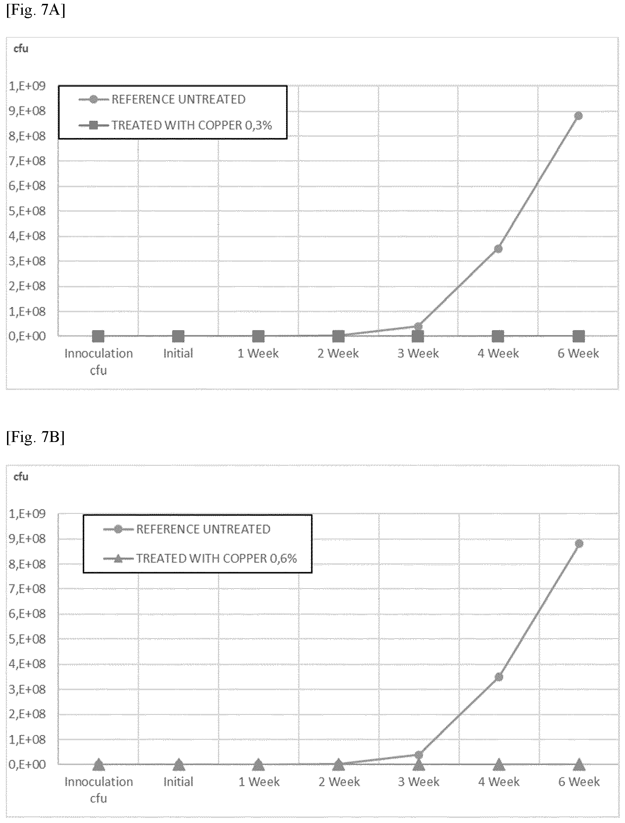

[Fig. 7A] and [Fig. 7B] show the proliferation curves of the fungi stain *Staphylococcus Aureus* inoculated on the panel core of air duct panels URSA AIR P8858 ZERO 25mm thickness untreated and treated with a phenolic binder comprising two different amounts of the inorganic biocide compound (copper sulfate pentahydrate). [Fig. 7A] and [Fig. 7B] show the curve when a phenolic binder comprising 0.3% ([Fig. 7A]) or 0.6% ([Fig. 7B]) of inorganic biocide compound is applied.

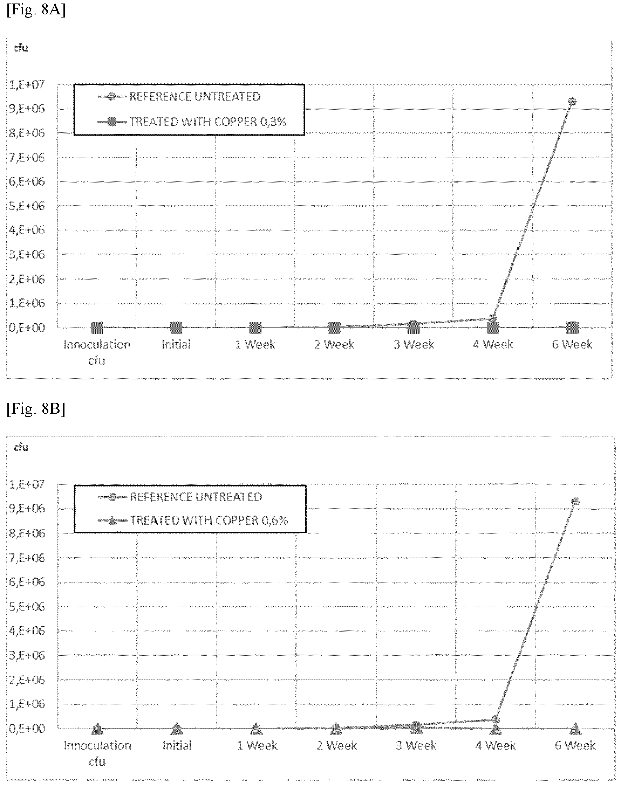

[Fig. 8A] and [Fig. 8B] show the proliferation curves of the fungi stain *Candida Albicans* inoculated on the panel core of air duct panels URSA AIR P8858 ZERO 25mm thickness untreated and treated with a phenolic binder comprising two different amounts of the inorganic biocide compound (copper sulfate pentahydrate). [Fig. 8A] and [Fig. 8B] show the curve when a phenolic binder comprising 0.3% ([Fig. 8A]) or 0.6% ([Fig. 8B]) of inorganic biocide compound is applied.

### Description of Embodiments

It is thus proposed a curable binder composition for a mineral wool product comprising a thermoset resin and an inorganic biocide compound, characterized in that the amount of inorganic biocide compound is less than or equal to 0.9 wt.% relative to the dry weight of the curable binder composition.

In one embodiment the amount of inorganic biocide compound in the curable binder composition compound may be between 0.01 wt.% and 0.9 wt.%, in particular between 0.1 wt.% and 0.85 wt.%, more particularly between 0.3 wt.% and 0.6 wt.% relative to the dry weight of the curable binder composition.

Unless mentioned otherwise, the weight percentages, in wt.%, as used herein are given as ratios relative to the dry weight of the curable binder composition. The sum of all components of the curable binder composition may surmount 100% in some embodiments. Throughout this description and in the claims, the weight percentages given for components of the binder composition are indicated for the compounds as such, in their pure form, excluding any impurities, water or solvents which they might contain, e.g. in their commercially available forms.

As used herein, the expression "curable binder composition for a mineral wool product" refers to any composition that can be applied on the surface of mineral wool fibers and that hardens when subjected to elevated heating temperatures, for example at above 100°C, in a curing oven to manufacture a mat of mineral wool fibers.

Typically, the mineral wool fibers may be glass wool fibers or stone wool fibers.

The expression "thermoset resin" refers to polymers that harden during the curing process, undergoing cross-linking reactions to form an infusible and insoluble three-dimensional polymer networks. Unlike thermoplastic polymers, once hardened the thermoset polymers cannot be melted for reshaping.

As used herein, the expression "inorganic biocide compound" refers to a salt of a metal element having biocide properties, in particular fungicide, bactericide and/or antiviral properties. The inorganic biocide compound may be in anhydrous form or hydrated form, in particular in hydrated form.

In a particular embodiment, the inorganic biocide compound may be chosen from a salt of a metal element selected from copper, nickel, silver, zinc and mixtures thereof, in particular may be a salt of copper.

The salt of the inorganic biocide compound may be chosen from, for example, acetate, bicarbonate, borate, carbonate, chloride, formate, hydroxide, lactate, oxalate, oxide, oxisulfate, oxychloride, sulfate, tallate and mixtures thereof, in particular acetate, bicarbonate, carbonate, hydroxide, oxide, oxisulfate, sulfate, tallate and mixtures thereof, more particularly oxisulfate, sulfate and mixture thereof.

According to one embodiment, the inorganic biocide compound may be chosen from copper acetate, copper bicarbonate, copper borate, copper carbonate, copper chloride, copper formate, copper hydroxide, copper lactate, copper oxalate, cuprous oxide, copper oxisulfate, copper oxychloride, copper sulfate, copper tallate and mixtures thereof, in particular copper acetate, copper bicarbonate copper carbonate copper hydroxide, cuprous oxide, copper oxisulfate, copper sulfate, copper tallate and mixtures thereof, more particularly copper oxisulfate, copper sulfate and mixture thereof. Preferably, the inorganic biocide compound is chosen from copper sulfate, copper acetate, copper chloride, copper lactate, copper formate and copper oxisulfate.

According to one specific embodiment, the inorganic biocide compound may be copper sulfate, in particular copper sulfate hydrate, more particularly copper sulfate pentahydrate.

According to a very specific embodiment, the inorganic biocide compound may be copper sulfate pentahydrate and the amount of inorganic biocide compound may be between 0.3 wt.% and 0.6 wt.% relative to the dry weight of the curable binder composition.

The curable binder composition according to the present invention comprising a thermoset resin and an inorganic biocide compound, can be prepared by methods well known in the art, such as by mixing the components before applying the curable binder composition to the surface of the mineral wool fibers. Additionally, the curable binder composition can be prepared by spraying the inorganic biocide compound on the thermoset resin before curing the curable binder composition on the surface of the mineral wool fibers.

The thermoset resin of the curable binder composition according to the invention may be a curable phenol-formaldehyde resole.

In addition of the inorganic biocide compound, the curable phenol-formaldehyde resole may comprise a first amount of urea (U1), a phenol-formaldehyde-urea (PFU) prereact or a mixture thereof.

As used herein, the term "phenol-formaldehyde-urea prereact" or "PFU prereact" refers to the product of a reaction between an aqueous phenol-formaldehyde resole and a second amount of urea (U2) carried out for at least 1 hour, in particular at least 2 hours, at a temperature lower than 70°C, in particular between 20°C and 60°C.

As used herein, the term "resole" refers to a reactive mixture with methylol functional groups, which undergo a self-curing reaction under influence of heat or acids. The resoles are thus partially reacted thermosets, also known as resins, prepolymers or precondensates, stable at low temperature and alkaline pH, and which can be further condensed to a thermoset in a curing reaction by application of heat and/or at acidic pH value. The skilled person is aware of how such resole is commonly manufactured and recognizes how to modify the different reaction phases and parameters to obtain the characteristics described in the preferred embodiments according to the invention. Such parameters include e.g. the phenol:formaldehyde molar ratio, the catalyst type and amount, and the condensation reaction time and temperature.

The first amount of urea (U1) may be comprised between 5 wt.% and 45 wt.%, in particular between 10 wt.% and 30 wt.%, more particularly between 15 wt.% and 20 wt.% relative to the dry weight of the curable phenol-formaldehyde resole.

The second amount of urea (U2) may be between 5 wt.% and 20 wt.%, in particular between 10 wt.% and 15 wt.% relative to the sum of the dry weight of the curable phenol-formaldehyde resole and the total amount of urea (Ut), wherein the total amount of urea (Ut) is the addition of the first amount of urea (U1) and the second amount of urea (U2).

According to a particular embodiment, the first amount of urea (U1) may be higher than 40 wt.%, in particular higher than 50 wt.% of the total amount of urea (Ut).

According to another particular embodiment, the first amount of urea (U1) may be 0 wt.%, and the second amount of urea (U2) may be between 5 wt.% and 45 wt.%, preferably between 10 wt.% and 30 wt.%, more preferably between 15 wt.% and 20 wt.% relative to the sum of the dry weight of the curable phenol-formaldehyde resole and the total amount of urea (Ut).

According to another particular embodiment, the second amount of urea (U2) may be at least 10 wt.% of the total amount of urea (Ut), and the total amount of urea (Ut) may be between 10 wt.% and 60 wt.% relative to the sum of the dry weight of the curable phenol-formaldehyde resole and the total amount of urea (Ut).

According to another particular embodiment, the sum of the first (U1) and second (U2) amounts of urea may be between 10 wt.% and 40 wt.%, preferably between 15 wt.% and 35 wt.%, relative to the sum of the dry weight of the curable phenol-formaldehyde resole and the total weight amount of urea (Ut), and the second amount of urea (U2) may be at least 40 wt.%, preferably at least 50 wt.%, of the total amount of urea (Ut).

The curable phenol-formaldehyde resole may be formed by contacting the first amount of urea (U1) and the phenol-formaldehyde-urea (PFU) prereact at least 24h after the production of the phenol-formaldehyde-urea (PFU) prereact, preferably at least 72h.

Advantageously, the emissions of formaldehyde from the mineral wool products manufactured by the curable phenol-formaldehyde resole according to this specific embodiment are significantly reduced compared with the case where the same total amount of urea (Ut) is only used in the preparation of the prereact, or when the first amount of urea (U1) is less than 40 wt.% of the total amount of urea (Ut).

According to a very specific embodiment, the curable phenol-formaldehyde resole may comprise:
urea in a first amount (U1) being between 15 wt.% and 35 wt.% relative to the sum of the dry weight of the curable phenol-formaldehyde resole and the total weight amount of urea (Ut),
a phenol-formaldehyde-urea prereact resulting from the reaction of an aqueous phenol-formaldehyde resole having a free formaldehyde content lower than 6 wt.% relative to the dry weight content of the resole and a second amount of urea (U2) being between 5 wt.% and 15 wt.% relative to the sum of the dry weight of the curable phenol-formaldehyde resole and the total amount of urea (Ut), and
an inorganic biocide compound being copper sulfate, in particular copper sulfate hydrate, more particularly copper sulfate pentahydrate,
wherein
the total amount of urea (Ut) may be between 10 wt.% and 40 wt.% relative to the sum of the dry weight of the curable phenol-formaldehyde resole and the total weight amount of urea (Ut), and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable phenol-formaldehyde resole.

The aqueous phenol-formaldehyde resole may have a free formaldehyde content of 10 wt.% or less, preferably of 6 wt.% or less, and also preferably of at least 1 wt.%, in relation to the dry weight content of the resole, when measured according to the method ISO 9397:1995 (hydroxylamine hydrochloride method).

Particularly good results of prereact stability, low free formaldehyde prereact content and low formaldehyde emissions have been achieved when using a resole with free formaldehyde content of less than 6 wt.% relative to the dry weight content of the resole, contacted with a second amount of urea (U2) of at least 5 wt.%, in particular of at least 10 wt.%, and at most 20 wt.% relative to sum of the resole dry weight and the weight of the total amount of urea (Ut)

Typically, the aqueous phenol-formaldehyde resole may also have at least one of the following characteristics:
a dry weight content between 40 wt.% and 60 wt.%,
a content of unreacted free phenol lower than 6 wt.%, in particular lower than 2 wt.% with respect to the resole dry weight content,
a water dilutability in demineralized water at 20°C greater than 10 parts relative to the weight (this is, at least 10 g of water can be added to 1 g of resole before permanent turbidity appears), in particular greater than 20 parts, and more particularly greater than 50 parts,
a viscosity at 20 °C lower than 50 mPa.s, in particular lower than 30 mPa.s, when measured for the resole aqueous solution with 45 wt.% dry weight content,
a pH of the resole solution higher than 8, in particular higher than 8.5, more particularly higher than 8.9,
a B-Stage gel time between 2 and 15 minutes at 130°C, and
a total amount of nitrogen lower than 1.0 wt.%, preferably lower than 0.6 wt.% relative to the dry weight content of the resole.

The methods used to determine these values are well known to the skilled person. For example, the dry weight content is defined as the weight fraction of residue remaining after drying 3 g of the aqueous composition (resole, prereact or binder) at 135°C for 1 hour in a ventilated oven, as measured according to ISO 3251:2008

The aqueous phenol-formaldehyde resole may also be substantially free of nitrogenated compounds (compounds comprising at least one nitrogen atom), particularly substantially free of a compound chosen from urea, ammonia, ammonium inorganic or organic salts, alkanolamines, alkylamines and/or melamine.

The aqueous phenol-formaldehyde resole may also be substantially free of formaldehyde scavengers chosen from the group of amines, tannins, sulfite and bisulfite salts, compounds with methylene active groups, glycine, resorcinol and its derivatives, alkanolamines, and mixtures thereof.

As used herein, "substantially free" means that the amount of the corresponding compound in the resole, is sufficiently low as to be negligible. In this context, it should be understood however that the compound in question might be present as traces, e.g. from unintended cross-contamination, preferably at an amount of ≤ 0.1 wt.% relative to the dry weights of the resole, prereact or binder.

The thermoset resin of the curable binder composition according to the invention may be a curable formaldehyde-free resin comprising, in addition of the inorganic biocide compound:
component a) a carbohydrate compound,
component b) a polycarboxylic acid,
component c) epoxysilane, and
optionally component d) one or more polyols having a molecular weight of less than 1000 g/mol,
wherein the amount of component c) may be from 0.1 wt.% to less than or equal to 3% wt. with respect to the sum of components a) and b).

While not wishing to be bound by theory, it is believed that an esterification reaction between component a) the carbohydrate compound and component b) the polycarboxylic acid takes place during curing. Moreover, it is also believed that the resin may also cure by the crosslinking reaction between multiple carboxylic groups of the polycarboxylic acid (component b) and multiple hydroxyl groups in the carbohydrate compound (component a)) and/or the polyol (optional component d)). Additionally, and/or alternatively, other curing mechanisms may take place based on chemical or physical interactions among the components.

As used herein, the expression "formaldehyde-free" means that no or essentially no formaldehyde is contained in the resin, is released from the resin, by curing the resin, from a binder containing the resin or from a mineral wool product containing the resin.
By "essentially no formaldehyde" it is meant that the amount of formaldehyde in the curable formaldehyde-free resin is less than 0.1 wt.% relative to sum of the weights of component a), component b), component c) and optional component d), more preferably less than 0.01 wt.%, or even below a detectable limit of formaldehyde, and even more preferably zero.

The components a), b), c) and d) of the curable formaldehyde-free resin according to the present disclosure contain all the components of this kind in the resin, i.e. all the carbohydrate compounds contained in the resin are contained in component a), all the polycarboxylic acids contained in the resin are contained in component b), all the epoxysilanes contained in the resin are contained in component c), and all the polyols contained in the resin are contained in optional component d).

The carbohydrate compound of component a) may comprise a reducing sugar and/or a nonreducing sugar, such as maltitol. Particularly, the carbohydrate compound can comprise one or more reducing sugars selected from monosaccharides, oligosaccharides, polysaccharides and mixtures thereof. Typically, component a) is a mixture of different saccharides, in particular a mixture of monosaccharides, oligosaccharides, and polysaccharides. For example, component a) may be a dextrin, preferably maltodextrin.

In a particular embodiment, in addition of the inorganic biocide compound, the curable formaldehyde-free resin may comprise:
component a) being maltodextrin,
component b) a polycarboxylic acid,
component c) epoxysilane, and
optionally component d) one or more polyols having a molecular weight of less than 1000 g/mol,
wherein the amount of component c) may be from 0.1 wt.% to less than or equal to 3% wt. with respect to the sum of components a) and b).

The dextrose equivalent (DE) of component a) may be between 11 and 21, in particular between 12 and 20, more particularly between 14 and 19, and even more particularly between 15 and 17.

According to a particular embodiment the dextrose equivalent may be between 17 and 21, more particularly between 11 and 15.

According to a more particular embodiment, the dextrose equivalent may be about 12 or 19.

Suitable methods to determine the dextrose equivalent are well known in the art. Particularly, the dextrose equivalent values mentioned in the present disclosure were all measured according to the norm ISO 5377-1994. This norm specifies a Lane and Eynon constant titre method for the determination of reducing power and dextrose equivalent in starch hydrolysis products.

According to a specific embodiment, component a) may be a maltodextrin having a DE between 11 and 21, preferably a DE of between 11 and 15 or between 17 and 19.

Typically, the curable formaldehyde-free resin may comprise component a) in the range between 40 wt.% and 80 wt.%, in particular between 50 wt.% and 70 wt.%. These amounts are particularly adapted to component a) being maltodextrin.

Typically, component b) may be a saturated aliphatic polycarboxylic acid or anhydride or salt thereof. For example, component b) may be a monomeric polycarboxylic acid. The monomeric polycarboxylic acid may be a dicarboxylic acid or a tricarboxylic acid. In a particular embodiment, the polycarboxylic acid may be a C3-C10 polycarboxylic acid comprising at least two carboxylic groups separated by at least 1 carbon atom. Suitable acids may include maleic acid, malonic acid, fumaric acid, malic acid, ascorbic acid, succinic acid, adipic acid, glutaric acid, tartaric acid, pimelic acid, suberic acid, azelaic acid, sebacic acid, citric acid, anhydrides and salts thereof, and mixtures thereof. In a particular embodiment, component b) may be chosen from citric acid, succinic acid, tartaric acid, adipic acid, anhydrides and salts thereof, and mixtures thereof. Component b) may also be a mixture of any of citric acid, succinic acid, tartaric acid, adipic acid, anhydrides and salts thereof.

According to a particular embodiment, the polycarboxylic acid may be citric acid.

In a particular embodiment, in addition of the inorganic biocide compound, the curable formaldehyde-free resin may comprise:
component a) a reducing sugar,
component b) being citric acid,
component c) epoxysilane, and
optionally component d) one or more polyols having a molecular weight of less than 1000 g/mol, wherein the amount of component c) may be from 0.1 wt.% to less than or equal to 3% wt. with respect to the sum of components a) and b).

According to a specific embodiment, component a) may be maltodextrin and component b) may be citric acid, in particular component a) may be maltodextrin having a DE between 17 and 19 or having a DE between 11 and 15, and component b) may be citric acid.

In addition of the inorganic biocide compound, the curable formaldehyde-free resin may comprise:
component a) being maltodextrin,
component b) being citric acid,
component c) epoxysilane, and
optionally component d) one or more polyols having a molecular weight of less than 1000 g/mol,
wherein the amount of component c) may be from 0.1 wt.% to less than or equal to 3% wt. with respect to the sum of components a) and b).

According to one embodiment, the curable formaldehyde-free resin may comprise component b) in the range between 20 wt.% and 50 wt.%, in particular between 25 wt.% and 40 wt.%. These amounts are particularly adapted to component b) being citric acid.

In a particular embodiment, the curable formaldehyde-free resin may comprise from 40 wt.% to 80 wt.% of maltodextrin and from 20 wt.% to 50 wt.% of citric acid, preferably from 50 wt.% to 70 wt.% of maltodextrin and from 25 wt.% to 40 wt.% of citric acid.

Advantageously, component c) epoxysilane improves the adhesion between the organic resin and the inorganic mineral wool in a curing step, i.e. acts as a "coupling agent". Providing coupling agents as such is known in the art, however, prior art resins are largely based on amino-silane. Amino-silanes are rather inexpensive components that exhibit good chemical stability and have been shown to improve the adhesion of a cured resin compared to no coupling agent being present at all in the curable resin. The inventors discovered that resins comprising epoxy-silane exhibit highly superior mechanical properties in comparison to resins comprising amino-silane. However, epoxysilane is a rather expensive component. A resin comprising epoxy-silane more than 3 wt.% of epoxysilane leads to improved mechanical properties, but results in a product of limited commercial interest, which encouraged the inventors to investigate other options. Further, the presence of epoxysilane in an amount according to the present disclosure facilitates processing the curable resin. The low solubility of epoxysilane impedes the processing with increasing weight percentage, requiring even to be pre-reacted in water. In addition, the reactivity of epoxysilane may lead to unwanted reactions difficult to control. Thus, curable resin according to the present disclosure having a moderate amount of epoxysilane, minimises said drawbacks related to the use of epoxysilane.

In preferred embodiments, component c) epoxysilane is an alcoxy-epoxy-silane, in particular an alcoxy-epoxy-silane selected from tri-methoxy-epoxy-silane, tri-ethoxy-epoxy-silane, isopropoxy-epoxy-silane, tert-butoxy-epoxy-silane, di-methoxy-epoxy-silane or di-ethoxy-epoxy-silane. Illustratively, component c) may be 3-glycidoxypropyltrimethoxysilane, 3-glycidoxyetyltrimethoxysilane, 3-glycidoxymetyltrimethoxysilane, 3-glycidoxypropyltriethoxysilane, 3-glycidoxyetyltriethoxysilane, 3-glycidoxymetyltriethoxysilane or mixtures thereof.

The alcoxy group of the alcoxy-epoxy-silane is hydrolysed in contact with the aqueous medium to a hydroxyl group that is able to react with the functional groups of the mineral wool, for example with silanol groups of glass fibre. Further, the epoxy group of the alcoxy-epoxy-silane opens in the aqueous environment, resulting in a silane comprising a hydroxyl group that can act as a crosslinker in the resin.

Optional component d) polyols are organic compounds containing at least two hydroxyl groups. Sugars, and in particular reducing sugars, are not polyols according to the present disclosure, (despite comprising multiple hydroxyl groups) as is general knowledge for the person skilled in the art. Sugar alcohols (or hydrogenated sugars), which are commonly derived from sugars, such as for example sorbitol, on the other hand may be regarded as polyols according to the present disclosure. It is believed that the polyol in the curable formaldehyde-free resin of the present application acts as an agent to improve the cross-linking degree.

In preferred embodiments the polyol has a few hydroxyl groups and a limited carbon chain length. Each of the one or more polyols has a molecular weight of less than 1000 g/mol, preferably of less than 500 g/mol and even more preferably of less than 300 g/mol. In one embodiment the one or more polyols contain no more than five hydroxyl groups, preferably no more than four hydroxyl groups, more preferably three hydroxyl groups. In another embodiment the one or more polyols contain exactly two hydroxyl groups.

In a particular embodiment, the polyol in the curable formaldehyde-free resin is an alkylene glycol. In the context of the present invention, alkylene glycols are understood as organic diols with two hydroxyl groups in two different carbon atoms. Preferably, the carbon atoms carrying the hydroxyl groups are vicinal. They can also be described as alcohols derived from ethylene glycol. The term alkylene glycols, as used herein, also includes diols obtained by condensation of ethylene glycol, in which the hydroxy groups are located in non-adjacent carbon atoms. Preferred alkylene glycols are ethylene glycol, propylene glycol, trimethylene glycol (1,3-propane diol), neopentyl glycol, diethylene glycol, triethylene glycol and polyethylene glycol. More preferably, the alkylene glycol is selected from ethylene glycol, propylene glycol and mixtures thereof. Even more preferably, the alkylene glycol is ethylene glycol.

In a preferred embodiment, the polyol in the curable formaldehyde-free resin according to the invention, is selected from ethylene glycol, tetraethylene glycol, 1,4-butanediol, 1,3-butanediol, 1,5 pentanediol, 1,6-hexanediol, glycerol, diglycerol, triglycerol, triethanolamine, diethanolamine, trimethylolpropane, propylene glycol and mixtures thereof. More preferably, the polyol is selected from ethylene glycol, tetraethylene glycol, 1,4-butanediol, glycerol, triglycerol, triethanolamine, trimethylolpropane, propylene glycol and mixtures thereof. In one embodiment the one or more polyol is ethylene glycol.

The total amount of optional component d) in the curable formaldehyde-free resin is between 0.5 wt.% and 10 wt.% with respect to the sum of components a) and b). Surprisingly, the Applicant has found that the mechanical properties of the curable formaldehyde-free resin, such as the maximum load value or the maximum slope value, drop dramatically when the total amount of polyols exceeds 10 wt.% with respect to the sum of components a) and b). The total amount of polyols in the curable formaldehyde-free resin should therefore be no greater than 10 wt.% with respect to the sum of components a) and b).

In one embodiment the total amount of optional component d) in the curable formaldehyde-free resin is between 1 wt.% and 6 wt.% with respect to the sum of components a) and b), preferably between 2 wt.% and 5 wt.%, and more preferably between 3 wt.% and 4 wt.% Alternatively the total amount of optional component d) in the curable formaldehyde-free resin is between 1 wt.% and 2 wt.% with respect to the sum of components a) and b). The range between 1 wt.% and 2 wt.% exhibits particularly high resistance to weathering and good ageing behavior.

While not wishing to be bound by theory, the Applicant believed that the polyols also function as a coupling agent between the inorganic mineral wool and the organic components of the resin in addition to the epoxysilanes. Indeed, it is believed that the polyol acts as a crosslinker agent within the resin. The small size of the polyols considered in the composition (having a molecular weight of less than 1000 g/mol) may allow the polyols to act as bridges between the components of the resin. On the other hand, the presence of polyols in an amount according to the present disclosure leads to an improvement of the mechanical properties of the resin. While a higher amount of polyol could lead to a very high crosslinking, the high crosslinking can result in a stiff resin, which is difficult to handle.

According to a specific embodiment, the curable formaldehyde-free resin may comprise:
component a) being maltodextrin,
component b) being citric acid,
component c) being epoxysilane, and
an inorganic biocide compound being copper sulfate, in particular copper sulfate hydrate, more particularly copper sulfate pentahydrate,
wherein
the amount of epoxysilane may be from 2 wt.% to less than 3 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable formaldehyde-free resin. Preferably, the maltodextrin may have a DE between 17 and 19.

According to a first very specific embodiment, the curable formaldehyde-free resin may comprise:
component a) being maltodextrin in the range from 50 wt.% to 60 wt.%, in particular from 53 wt.% to 55 wt.%,
component b) being citric acid in the range from 30 wt.% to 40 wt.%, in particular from 35 wt.% to 37 wt.%
component c) being epoxysilane, and
an inorganic biocide compound being copper sulfate, in particular copper sulfate hydrate, more particularly copper sulfate pentahydrate,
wherein
the amount of epoxysilane may be from 2 wt.% to less than 3 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1wt.% and 0.85 wt.%, even more particularly between 0.3 wt.% and 0.6 wt.% relative to the dry weight of the curable formaldehyde-free resin. Preferably, the maltodextrin may have a DE between 17 and 19.

According to a second very specific embodiment, the curable formaldehyde-free resin may comprise:
component a) being maltodextrin in the range from 60 wt.% to 70 wt.%,
component b) being citric acid in the range from 25 wt.% to 40 wt.%,
component c) being epoxysilane,
component d) being ethylene glycol, and
an inorganic biocide compound being copper sulfate, in particular copper sulfate hydrate, more particularly copper sulfate pentahydrate,
wherein
the amount of epoxysilane may be from 0.5 wt.% to less than 2 wt.% with respect to the sum of maltodextrin and citric acid,
the amount of ethylene glycol, that is the total amount of polyols, may be between 0.5% and 2 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable formaldehyde-free resin. Preferably, the maltodextrin may have a DE between 17 and 19.

According to a third very specific embodiment, the curable formaldehyde-free resin may comprise:
component a) being maltodextrin in the range between 60 wt.% to 70 wt.%,
component b) being citric acid in the range from 25 wt.% to 40 wt.%,
component c) being epoxysilane,
component d) being one or more polyols having a molecular weight of less than 1000 g/mol, and having exactly two hydroxyl groups, and
an inorganic biocide compound being copper sulfate, in particular copper sulfate hydrate, more particularly copper sulfate pentahydrate,
wherein
the amount of epoxysilane may be from 0.5 wt.% to less than 2 wt.% with respect to the sum of maltodextrin and citric acid,
the total amount of the one or more polyols may be between 0.5 wt.% and 2 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable formaldehyde-free resin. Preferably, the maltodextrin may have a DE between 17 and 19.

According to a fourth very specific embodiment, the curable formaldehyde-free resin may comprise:
component a) being maltodextrin in the range from 60 wt.% to 70 wt.%,
component b) being citric acid in the range from 25 wt.% to 40 wt.%,
component c) being epoxysilane,
component d) being ethylene glycol, and
an inorganic biocide compound being copper sulfate, in particular copper sulfate hydrate, more particularly copper sulfate pentahydrate,
wherein
the amount of epoxysilane may be between 0.1 wt.% to and 0.5 wt.% with respect to the sum of maltodextrin and citric acid,
the amount of ethylene glycol, that is the total amount of polyols, may be comprised between 0.5 wt.% and 2 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable formaldehyde-free resin. Preferably, the maltodextrin may have a DE between 17 and 19.

According to a fifth very specific embodiment, the curable formaldehyde-free resin may comprise:
component a) being maltodextrin in the range from 60 wt.% to 70 wt.%,
component b) being citric acid in the range from 25 wt.% to 40 wt.%,
component c) being epoxysilane,
component d) being one or more polyols having a molecular weight of less than 1000 g/mol, and having exactly two hydroxyl groups,, and
an inorganic biocide compound being copper sulfate, in particular copper sulfate hydrate, more particularly copper sulfate pentahydrate,
wherein
the amount of epoxysilane may be between 0.1 wt.% to and 0.5 wt.% with respect to the sum of maltodextrin and citric acid,
the total amount of the one or more polyols may be between 0.5 wt.% and 2 wt.% with respect to the sum of maltodextrin and citric acid, and
the amount of inorganic biocide compound may be less than or equal to 0.9 wt.%, in particular between 0.01 wt.% and 0.9 wt.%, more particularly between 0.1 wt.% and 0.85 wt.%, even more particularly between 0.3 wt.% and 0.6 wt.% relative to the dry weight of the curable formaldehyde-free resin. Preferably, the maltodextrin may have a DE between 17 and 19.

In a particular embodiment, the thermoset resin of the curable binder composition according to the invention may comprise reaction products of an amine component and a reducing sugar. Said thermoset resin can be made via a Maillard reaction forming polymeric melanoidins. Suitable amine components include ammonia, a primary amine, a secondary amine, proteins, peptides, amino acids and ammonium salts.

In another particular embodiment, the thermoset resin of the curable binder composition may consist of phenol-formaldehyde and phenol-formaldehyde-amine condensates. In a preferred embodiment the amine in the phenol-formaldehyde-amine condensates is an alkanolamine or a cyclic amine.

The curable phenol-formaldehyde resole and the curable formaldehyde-free resin may further contain a catalyst. The catalyst may facilitate and/or accelerate the subsequent curing step. Typical examples of useful catalysts are ammonium sulfate or phosphorous-containing esterification catalysts, like alkali metal hypophosphite salts, alkali metal phosphites, alkali metal polyphosphates, and the like. A preferred catalyst is ammonium sulfate or sodium hypophosphite. Ammonium sulfate is more adapted to the curable phenol-formaldehyde resole. Sodium hypophosphite is more adapted to the curable formaldehyde-free resin.

The amount of the catalyst may depend on the curable binder composition.

Typically, the amount of the catalyst in the curable phenol-formaldehyde resole may be below 15 wt.%, preferably between 1 wt.% and 10 wt.% relative to the dry weight of the curable phenol-formaldehyde resole.

For example, the amount of the catalyst in the curable formaldehyde-free resin according to the invention may be greater than 0.1 wt.% and less than 5 wt.% relative to the sum of the weights of the components a) and b) of the resin, preferably the amount of the catalyst may be between 2.90 wt.% and 3 wt.%. In a particular embodiment, the curable formaldehyde-free resin according to the invention may contain sodium hypophosphite in an amount of greater than 0.1 wt.% and less than 5 wt.% relative to the sum of the weights of the components a) and b) of the resin, preferably in an amount of about 3 wt.%.

The curable phenol-formaldehyde resole and the curable formaldehyde-free resin may further contain additives. Non-limiting examples of such additives are hydrophobising agents such as silicones and fluorocarbon-polymers, dedusting agents such as paraffin and mineral oils, fibre softeners, preservatives, dyes and/or corrosion inhibitors, among others.

The curable phenol-formaldehyde resole may comprise also specific additives such as resin extenders different than urea, such as carbohydrates, adhesion promoters such as silanes, and water repellent agents such as silicones, and more particularly reactive silicones. It is particularly preferred to include up to 10 wt.% of molasses and/or glucose as resin extender.

The curable binder composition of the present invention may be used to manufacture mineral wool products.

In another aspect, it is thus proposed a method for manufacturing a mineral wool product comprising mineral wool fibers and an inorganic biocide compound, the method comprising the following steps:
a) providing the curable binder composition according to the invention as defined above,
b) applying the curable binder composition to the surface of the mineral wool fibers, and
c) curing the curable binder composition on the surface of the mineral wool fibers to obtain the mineral wool product comprising mineral wool fibers and an inorganic biocide compound.

The inorganic biocide compound is as defined above in relation with the curable binder composition.

Typically, the curable binder composition may be applied by spraying onto the surface of freshly formed wool fibers arising from a fiberizing device.

The curing step c) may be carried out by passing the mineral wool fibers bearing the curable binder composition through a curing oven, in particular an air-circulated curing oven, set at a temperature higher than 100°C, preferably at a temperature between 140°C and 180°C. The curing time preferably ranges from 3 to 5 minutes.

The mineral wool product may afterwards be trimmed and shaped into its final dimensions, optionally rolled up, and packaged. For example, the mineral wool product may be trimmed and shaped into mineral wool panels adapted to the manufacture of air duct.

Additionally or alternatively, facing layers like paper, aluminum, glass veil or combinations thereof might be applied to the mineral wool product depending on its intended application.

The curable binder composition is advantageously applied in an amount to produce a solid binder content in the mineral wool product after drying and curing between 3 wt.% and 18 wt.% relative to the weight of the mineral wool product. This amount of cured binder is measured as LOI (loss on ignition) according to ISO 29771:2008.

Accordingly, the amount of inorganic biocide compound in the mineral wool product may be less than or equal to 0.16 wt.%, in particular between 0.0003 wt.% and 0.16 wt.%, more particularly between 0.003 wt.% and 0.15 wt.%, even more particularly between 0.009 wt.% and 0.11wt.% relative to the weight of mineral wool product.

In another aspect, it is thus proposed a mineral wool product comprising mineral wool fibers and an inorganic biocide compound, characterized in that the amount of inorganic biocide compound in the mineral wool product is less than or equal to 0.16 wt.% relative to the weight of mineral wool product.

For example, the amount of inorganic biocide compound in the mineral wool product may be between 0.0003 wt.% and 0.16 wt.%, in particular between 0.003 wt.% and 0.15 wt.%, more particularly between 0.009 wt.% and 0.11 wt.% relative to the weight of mineral wool product.

According to a specific embodiment, the amount of inorganic biocide compound in the mineral wool product may be between 0.02 wt.% and 0.13 wt.%, in particular between 0.04 wt.% and 0.11 wt.%, more particularly between 0.05 wt.% and 0.09 wt.% relative to the weight of mineral wool product.

The biocide inorganic compound is as defined above in relation with the curable binder composition according to the invention.

According to one specific embodiment, the amount of inorganic biocide in the mineral wool product may be comprised between 0.02 wt.% and 0.14 wt.% relative to the weight of mineral wool product. This specific embodiment is advantageously adapted to mineral wool product used for air duct panels.

According to another specific embodiment, the amount of inorganic biocide compound in the mineral wool product may be about 0.07 wt.% relative to the weight of mineral wool product.

According to one very specific embodiment, the inorganic biocide compound may be a salt of a metal element and the amount of said metal element in the mineral wool product may be comprised between 7.6 ppm and 400 ppm, preferably between 10 and 350 ppm, more preferably between 15 and 300 ppm, more preferably between 50 and 250 ppm, even more preferably between 100 and 200 ppm relative to the weight of mineral wool product. In this very specific embodiment, the metal element is advantageously copper.

The mineral wool product may be obtained by applying the curable binder composition according to the invention as defined above to the surface of the mineral wool fibers and then curing the binder composition on the surface of the mineral wool fibers, e.g. at a temperature higher than 100°C, preferably at a temperature between 140°C and 180°C. A suitable method for manufacturing a mineral wool product comprising mineral wool fibers and an inorganic biocide compound according to the invention is described above.

The mineral wool product may be shaped into different specific products. Therefore, the mineral wool product may be a mineral wool panel or a mineral wool rolled up board.

Accordingly, it is also proposed a method for manufacturing mineral wool panels, the method comprising the following step:
- trimming and shaping a mineral wool product comprising mineral wool fibers and an inorganic biocide compound according to the invention as defined above or the mineral wool product comprising mineral wool fibers and an inorganic biocide compound obtained in step c) of the method for manufacturing a mineral wool product comprising mineral wool fibers and an inorganic biocide compound according to the invention as defined above into shaped mineral wool panel.

The mineral wool panel may be obtained by trimming and shaping:
- a mineral wool product comprising mineral wool fibers and an inorganic biocide compound obtained in step c) of the method for manufacturing a mineral wool product comprising mineral wool fibers and an inorganic biocide compound according to the invention as defined above, or
- a mineral wool product comprising mineral wool fibers and an inorganic biocide compound according to the invention as defined above.

A suitable method for manufacturing a mineral wool panel according to the invention is described above.

The mineral wool product, in particular being a mineral wool panel, may be used in the thermal and acoustic insulation of buildings, transportations or appliances, for fire protection or for other non-insulation applications such as air duct.

Therefore, in another aspect, it is proposed the use of a mineral wool panel as defined above to make duct, preferably air duct.

In another aspect, it is also proposed an air duct made of at least one, in particular at least two, more particularly four mineral wool panels as defined above.

Accordingly, it is proposed a method for manufacturing an air duct made of a plurality of mineral wool panels, the method comprising the following steps:
- trimming and shaping a mineral wool product comprising mineral wool fibers and an inorganic biocide compound according to the invention as defined above or the mineral wool product comprising mineral wool fibers and an inorganic biocide compound obtained in step c) of the method for manufacturing a mineral wool product comprising mineral wool fibers and an inorganic biocide compound according to the invention as defined above into shaped mineral wool panels,
- assembling a plurality of mineral wool panels to form the air duct, wherein at least one mineral wool panel, in particular at least two mineral wool panels, more particularly all the mineral wool panels of the plurality of mineral wool panels is(are) a shaped mineral wool panel.

The air duct made of a plurality of mineral wool panels may be obtained by assembling a plurality of mineral wool panels to form the air duct, wherein at least one mineral wool panel, in particular at least two mineral wool panels, more particularly all the mineral wool panels of the plurality of mineral wool panels comprise(s) mineral wool fibers and an inorganic biocide compound. A suitable method for manufacturing an air duct according to the invention is described below.

### Examples

### Binder evaluation at laboratory scale: stability and reactivity

### Stability - Water dilutability

The stability in distilled water of the binder compositions described in Table 1 below was tested at laboratory scale by determining the water dilutability. A phenol-fomaldehyde-urea (PFU) resole was used containing 51% of solid content and a pH of 9. The results are presented in Fig. 1.

**Table 1: binder compositions tested**

| Component | Composition 0 | Composition 1 | Composition 2 | Composition 3 | Composition 4 | Composition 5 | Composition 6 |
|---|---|---|---|---|---|---|---|
| PFU Resole | 95.1% | 95.1% | 95.0% | 94.8% | 94.7% | 94.4% | 93.8% |
| Ammonium sulfate | 4.9% | 4.8% | 4.7% | 4.7% | 4.7% | 4.7% | 4.7% |
| Copper sulfate | 0% | 0.1% | 0.3% | 0.4% | 0.6% | 0.9% | 1.5% |

Fig. 1 shows that the water dilutability diminishes as the amount of copper sulfate increases. More particularly Fig. 1 evidences that the water dilutability of the compositions 1 to 5 having an amount of copper sulfate of between 0.1 wt.% and 0.9 wt.% is higher than 4 g/g. Fig. 1 also evidences that the water dilutability of the composition 6 having an amount of copper sulfate of 1.5 wt.% is 4 g/g. Composition 1 to 5 are stable while composition 6 is not stable and precipitates.

### Reactivity - B-time

The B-time, B-Stage time or Gel time is the time a resole requires to reach the gelled B-stage, determined at 130°C according to the DIN 16916. The curing process of the resole resins comprises three well-known stages: the liquid resole (A-Stage resin), the gelled resin (B-Stage), and the fully cross-linked phenolic resin (C-Stage). The B-time of insulation resins should be in the range 300-1,200 seconds to ensure the binder has an adequate processability and produces optimal mechanical properties in the product. Particularly, B-times shorter than 300 seconds may generate binder pre-curing before the mineral wool enters the curing oven, that is, the binder would not have enough time to glide into the junction points and would thus cause a poor recovery of the mineral wool. On the other hand, too high B-time values don't enable the curing to be completed. Both scenarios lead to mineral wool mechanical properties worsening.

The B-time of the binder compositions 1 to 6 of Table 1 above were tested at laboratory scale. The B-time was determined using a B-time device placing 0.5 g (420 µL) of each composition on the device after being pre-heated up to 130°C. The sample is kept at 130°C while being stirred circularly from the rim to the center with a glass rod. The B-time is reached when the sample snaps up when lifting the glass rod.

Fig. 2 shows the impact of the amount of copper sulfate salt on the reactivity of the binder compositions 1 to 6 of Table 1. Particularly, Fig. 2 shows the evolution of the B-time with the amount of copper sulfate salt in the binder compositions 1 to 6 of Table 1.

The increase of copper sulfate pentahydrate biocide up to 0.4 wt.% in the binder composition reduces the B-time by 25%, thus increasing the binder reactivity. Further increase of copper sulfate until 1.5% does not impact the B-time anymore and the reactivity remains stable in the adequate processability ranges.

### Evaluation of the biocide performance of the binder compositions.

The binder composition 2 and the binder composition 4 of Table 1 above were used to manufacture samples of panels URSA AIR P8858 ZERO 25mm thickness, to carry out biocide performance essays. As a reference, samples were produced with the binder composition 0 without addition of copper sulfate pentahydrate.

Panels URSA AIR P8858 ZERO 25mm thickness contain a core of glass mineral wool of ca. 80 kg/m³ density with a weight binder content of approximately 10%. The product also comprises an 'internal surface' made of a black glass fabric, which covers the internal surface of the air duct.

The biocide effectiveness of the binder compositions was tested on both the internal surface fabric and inside the core of glass mineral wool. This is because both are eventually exposed to the air circulating thru the conduct. The procedure was done by a specialized microbiology laboratory following standard procedures known by experts in the technique, which are summarized as follows:
a) In a first step, the specimens of panels were tested to confirm the absence of bacteria or fungi on the internal surface and in the panel core,
b) In a second step, different parts of the panel were inoculated with different strain of fungi or bacteria. For the determination of the growth on the internal surface, a paste containing each strain of fungi or bacteria was prepared in a formulated mixture of peptone to provide the strain a suitable growing environment. The paste was then applied on the internal surface of each of the panel specimens. For the determination of the growth in the panel core, the panel core was disaggregated in contact with a solution containing the mixture of the fungi or bacteria strains in a peptone solution,
c) In a third step, the specimens containing the inoculated fungi or bacteria, either panels or disaggregated core, were stored in a climatic chamber selecting the most favorable conditions for growth, consisting in a temperature of 30°C and a relative humidity of 95%, and subsequently tested after 24 h to count the cfu (colony forming units) to ensure they had been successfully inoculated. The survival rate at the initial inoculation should be at least 90% after 24 h to consider a successful inoculation and proceed with the rest of the essay. In this case,
   the proliferation of all strains was then analyzed determining the cfu at different incubation times, from 1 week and up to 6 weeks.

Fig. 3 shows the proliferation of *Pseudomona Aeruginosa* inoculated on the internal surface of the air duct panels untreated and treated with the composition 2 for several incubation times. The addition of copper sulfate inorganic biocide in the binder composition totally avoids the proliferation of the *Pseudomona Aeruginosa* in the internal surface.

Fig. 4 shows the proliferation curve of the *Staphylococcus Aureus* inoculated on the internal surface of the air duct panels untreated and treated with the composition 2 for several incubation times: The addition of copper sulfate inorganic biocide in the binder composition totally avoids the proliferation of the *Staphylococcus Aureus* in the internal veil surface.

Fig. 5 shows the proliferation curve of the fungi strain *Candida Albicans* inoculated on the internal surface of the air duct panels untreated and treated with the composition 2 for several incubation times. The addition of copper sulfate inorganic biocide in the binder composition totally avoids the proliferation of the fungi strain *Candida Albicans* in the internal veil surface.

Fig. 6a shows the proliferation of *Pseudomona Aeruginosa* inoculated on the panel core of air duct panels untreated and treated with the composition 2 for several incubation times. The Fig. 6b shows the proliferation of *Pseudomona Aeruginosa* treated with composition 4: The addition of copper sulfate inorganic biocide in the binder composition totally avoids the proliferation of the *Pseudomona Aeruginosa.*

Fig. 7a shows the proliferation curve of the *Staphylococcus Aureus* inoculated on the panel core of the air duct panels untreated and treated with the composition 2 for several incubation times.

Fig. 7b shows the proliferation of *Staphylococcus Aureus* treated with composition 4: The addition of copper sulfate inorganic biocide in the binder composition totally avoids the proliferation of the *Staphylococcus Aureus.*

Fig. 8a shows the proliferation curve of the fungi strain *Candida Albicans* inoculated on the panel core of the air duct panels untreated and treated with the composition 2 for several incubation times. Fig. 8b shows the proliferation of *Candida Albicans* treated with composition 4: The addition of copper sulfate inorganic biocide in the binder composition totally avoids the proliferation of the fungi strain *Candida Albicans.*

## Claims

1. Curable binder composition for a mineral wool product comprising a thermoset resin and an inorganic biocide compound,
**characterized in that** the amount of inorganic biocide compound is less than or equal to 0.9 wt.% relative to the dry weight of the curable binder composition.

2. Curable binder composition according to claim 1 wherein the amount of inorganic biocide compound is between 0.01 wt.% and 0.9 wt.%, in particular between 0.1 wt.% and 0.85 wt.%, more particularly between 0.3 wt.% and 0.6 wt.% relative to the dry weight of the curable binder composition.

3. Curable binder composition according to claim 1 or 2, wherein the inorganic biocide compound is chosen from a salt of a metal element selected from copper, nickel, silver, zinc and mixtures thereof.

4. Curable binder composition according to claim 3, wherein the salt is chosen from acetate, bicarbonate, borate, carbonate, chloride, formate, hydroxide, lactate, oxalate, oxide, oxisulfate, oxychloride, sulfate, tallate and mixtures thereof.

5. Curable binder composition according to any one of claims 1 to 4, wherein the inorganic biocide compound is chosen from copper acetate, copper bicarbonate, copper borate, copper carbonate, copper chloride, copper formate, copper hydroxide, copper lactate, copper oxalate, cuprous oxide, copper oxisulfate, copper oxychloride, copper sulfate, copper tallate and mixtures thereof.

6. Curable binder composition according to any one of claims 1 to 5 wherein the thermoset resin is a curable phenol-formaldehyde resole.

7. Curable binder composition according to claim 6, wherein the curable phenol-formaldehyde resole comprises, in addition of the inorganic biocide compound, a first amount of urea (U1), a phenol-formaldehyde-urea (PFU) prereact or a mixture thereof, the phenol-formaldehyde-urea prereact being the product of a reaction between an aqueous phenol-formaldehyde resole and a second amount of urea (U2) carried out for at least 1 hour at a temperature lower than 70°C.

8. Curable binder composition according to claim 7, wherein the second amount of urea (U2) is between 5 wt.% and 20 wt.% relative to the sum of the dry weight of the curable phenol-formaldehyde resole and the total amount of urea (Ut), wherein the total amount of urea (Ut) is the addition of the first amount of urea (U1) and the second amount of urea (U2).

9. Curable binder composition according to claim 7 or claim 8, wherein the first amount of urea (U1) is higher than 40 wt.% of the total amount of urea (Ut).

10. Curable binder composition according to any one of claims 1 to 5, wherein the thermoset resin is a curable formaldehyde-free resin comprising, in addition of the inorganic biocide compound:
component a) a carbohydrate compound,
component b) a polycarboxylic acid,
component c) epoxysilane, and
optionally component d) one or more polyols having a molecular weight of less than 1000 g/mol,
wherein the amount of component c) may be from 0.1 wt.% to less than or equal to 3% wt. with respect to the sum of components a) and b).

11. Curable binder composition according to any one of claims 1 to 5, wherein the thermoset resin comprises reaction products of an amine component and a reducing sugar.

12. Curable binder composition according to any one of claims 1 to 5, wherein the thermoset resin consists of phenol-formaldehyde and phenol-formaldehyde-amine condensates.

13. Method for manufacturing a mineral wool product comprising mineral wool fibers and an inorganic biocide compound, the method comprising the following steps:
a) providing a curable binder composition as defined in any one of claims 1 to 12,
b) applying the curable binder composition to the surface of the mineral wool fibers, and
c) curing the curable binder composition on the surface of the mineral wool fibers to obtain the mineral wool product comprising mineral wool fibers and an inorganic biocide compound.

14. Mineral wool product comprising mineral wool fibers and an inorganic biocide compound, **characterized in that** the amount of inorganic biocide compound in the mineral wool product is less than or equal to 0.16 wt.% relative to the weight of mineral wool product.

15. Mineral wool product according to claim 14 wherein the amount of inorganic biocide compound is between 0.0003 wt.% and 0.16 wt.%, in particular between 0.003 wt.% and 0.15 wt.%, more particularly between 0.009 wt.% and 0.11 wt.% relative to the weight of mineral wool product.

16. Mineral wool product according to claim 14 or claim 15, wherein the inorganic biocide compound is a salt of a metal element and the amount of said metal element in the mineral wool product is comprised between 7.6 ppm and 400 ppm relative to the weight of mineral wool product.

17. Mineral wool product according to claim 16 wherein the metal element is copper.

18. A mineral wool product according to any one of claim 14 to 17 being a mineral wool panel or a mineral wool rolled up board.

19. Use of a mineral wool panel as defined in claim 18 to make duct, preferably air duct.

20. An air duct made of at least one mineral wool panel as defined in claim 18.
